Europäisches Patentamt

European Patent Office

Office européen des brevets

(19)

(11) Veröffentlichungsnummer: **0 221 230 B1**

(12) # EUROPÄISCHE PATENTSCHRIFT

(45) Veröffentlichungstag der Patentschrift:
24.01.90

(21) Anmeldenummer: 86103067.4

(22) Anmeldetag: 07.03.86

(51) Int. Cl.⁴: **F16K 11/00**

(54) **Sanitäres Mischventil.**

(30) Priorität: 18.03.85 DE 3509666

(43) Veröffentlichungstag der Anmeldung:
13.05.87 Patentblatt 87/20

(45) Bekanntmachung des Hinweises auf die Patenterteilung:
24.01.90 Patentblatt 90/4

(84) Benannte Vertragsstaaten:
AT BE CH DE FR GB IT LI NL SE

(56) Entgegenhaltungen:
DE-A- 2 736 632
DE-B- 1 550 060
US-A- 1 591 332

(73) Patentinhaber: IDEAL-STANDARD GMBH, Euskirchener Strasse 80, D-5300 Bonn 1(DE)

(72) Erfinder: Delker, Wilfried, Panoramastrasse 3 a,,
D-5330 Königswinter(DE)
Erfinder: Ralthel, Günther, Bei der Linde 22,
D-8672 Selb(DE)

(74) Vertreter: Puchberger, Georg, Dipl.-Ing., Patentanwälte
Dipl.-Ing. Georg Puchberger Dipl.-Ing. Rolf Puchberger
Dipl.-Ing. Peter Puchberger
Singerstrasse 13 Postfach 55, A-1010 Wien(AT)

## Beschreibung

Die Erfindung bezieht sich auf ein Verfahren zur Herstellung eines sanitären Mischventiles, bei dem ein Ventilgehäuse und ein Auslauf aus keramischem Material vorgesehen sind und im Ventilgehäuse eine Ventileinrichtung angeordnet ist, das einen Griffhebel zur Bedienung der Ventileinrichtung trägt.

Absperr- oder Mischventile mit farbigen Ventilgehäusen sind seit einer Vielzahl von Jahren bekannt und werden insbesondere in Badezimmern und Küchen installiert. Die Ventilgehäuse bestehen in aller Regel aus Messing und weisen metallische oder nichtmetallische Oberflächen auf. Für die Herstellung verschiedenartiger Ventilgehäuse ist es üblich, diese entweder mit einem Naßlack zu überziehen, welcher nach der Trocknung mittels einer transparenten Kunstharzschicht geschützt wird, oder mit einer Pulverbeschichtung zu versehen, die eingebrannt wird.

Ein Nachteil bei den bisherigen Ventilen dieser Art ist darin zu sehen, daß die metallischen oder nichtmetallischen Oberflächen weder putzmittelnoch kratzfest und wegen der hohen Wärmeleitfähigkeit von Messing erheblichen schlagartigen Temperaturschwankungen ausgesetzt sind, was der Benutzer als unangenehm empfindet. Hinzu kommt noch, daß es fertigungstechnisch schwierig ist, an den herkömmlichen Oberflächen Dekors, Ornamente, Kennzeichnen o.dgl. anzubringen. Außerem sind verchromte Ventilgehäuse anfällig gegen Verkalkungen.

Aus der US-A 1 591 332 ist es bereits bekannt, einen sanitären Wasserauslaß aus Porzellan oder Keramik herzustellen, wobei in einem Ventilgehäuse eine Ventileinrichtung angeordnet ist und zur Bedienung ein Griffhebel vorgesehen ist.

Der Erfindung liegt die Aufgabe zugrunde, die Herstellung der sanitären Mischventile zu vereinfachen, trotzdem aber eine hohe Maßgenauigkeit zu erreichen.

Erreicht ist dieses Ziel dadurch, daß bei dem eingangs erwähnten Verfahren das Ventilgehäuse gedreht wird und der Auslauf gegossen und dann an das Ventilgehäuse angeformt wird. Durch die erfinderische Maßnahme erreicht man eine Reihe von Vorteilen, einmal kann die relativ komplizierte Form des Ventilgehäuses samt Auslauf relativ einfach hergestellt werden, es ist möglich, den Auslauf anzuformen, so daß ein einstückiger Körper hergestellt werden kann, dort wo eine hohe Maßgenauigkeit erreicht werden muß, nämlich der Aufnahme der Ventileinrichtung, kann diese hohe Maßgenauigkeit gewährleistet werden, so daß die Abdichtung des Ventilgehäuses unproblematisch ist, und es ist auch in einfacher Weise möglich, je nach den Beanspruchungen die Wandstärken der einzelnen Teile zu wählen und für Ventilgehäuse und Auslauf verschiedene Keramikzusammensetzung zu verwenden, die den Bedürfnissen, insbesondere den Belastungen dieser Teile entsprechend Rechnung tragen.

Trotz der US-A 1 591 332 war es überraschend, daß ein sanitäres Mischventil aus mehreren Teilen zusammengesetzt werden kann, ohne daß sich daraus Nachteile ergeben. Im Gegenteil es ist sogar möglich, noch weit kompliziertere Formen als bisher herzustellen und so den Wünschen der Konsumenten hinsichtlich der Formgestaltung entgegenzukommen.

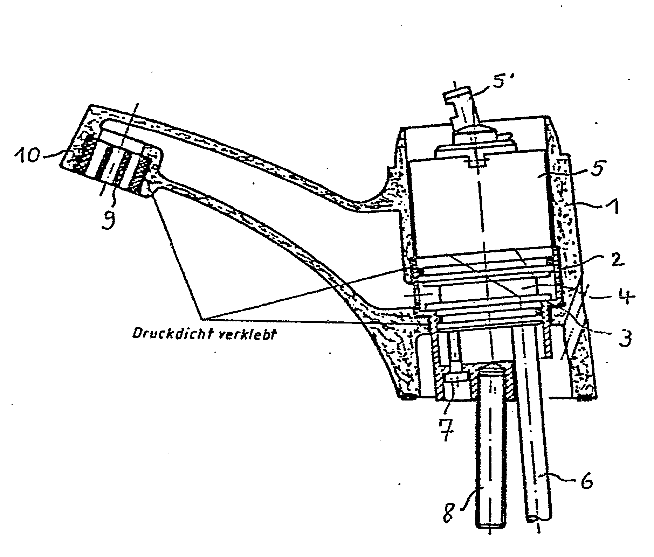

In der Zeichnung ist der erfindungsgemäß hergestellte Gegenstand in einem Ausführungsbeispiel als Einhebel-Mischventil für Waschtische im Längsschnitt dargestellt.

Darin ist mit 1 ein Ventilgehäuse bezeichnet. Das Ventilgehäuse 1 besteht aus Porzellan und weist eine glasierte Oberfläche auf. In dem Ventilgehäuse 1 befindet sich eine Messinghülse 2 mit einem Absatz 3 zur Aufnahme eines Anschlußsockels 4 für die Befestigung einer die Steuerelemente beinhaltenden Kartusche 5. Die Betätigung der Steuerelemente erfolgt über einen Steuerhebel 5', an dem ein nicht dargestellter Griffhebel aus Porzellan befestigt ist. Die Messinghülse 2 ist mit dem Ventilgehäuse 1 druckdicht verklebt und also auf diese Weise befestigt und radial abgedichtet. Der mit Anschlußröhrchen 6 für kaltes und warmes Wasser versehene Anschlußsockel 4 ist in der Messinghülse 2 mittels einer Schraube 7 befestigt. Die Befestigung des Mischventiles auf dem nicht gezeigten Waschtisch erfolgt mit Hilfe eines Gewinde-Stehbolzens 8. Mit 9 ist ein mit dem Auslaufende 10 des Ventilgehäuses 1 druckdicht verklebter Strahlregler bezeichnet.

Die Verwendung eines Strahlreglers ist deshalb vorteilhaft, weil der Einsatz von sogenannten Wasser-Luft-Mischdüsen mit Siebeinsätzen zu Verstopfungen führen und damit Staudrücke verursachen könnte, wodurch das keramische Ventilgehäuse 1 unerwünschten Biegebeanspruchungen ausgesetzt werden würde.

Die Herstellung eines erfindungsgemäßen Mischventils bereitet in der Herstellung keine Schwierigkeiten. Der Kostenaufwand ist relativ gering. Die keramischen Ventilgehäuse, deren Wäremleitfähigkeit gegenüber Metallausführungen deutlich geringer ist, und die deshalb im Betrieb wohltemperiert bleiben, können leicht in beliebigen Farben und Formen hergestellt und mit beliebigen Dekors, Ornamenten, Kennzeichen etc. versehen werden. Dies bedeutet ferner, daß die pflegeleichten Ventilgehäuse ohne Schwierigkeiten mit Oberflächen im Glasurbrand versehen werden können, die denen entsprechen, welche z.B. farbige Küchenspülen oder sanitäre Apparate aufweisen, wie Waschtische, Bidets, Badewannent etc. Verkalungsgefahren bestehen nicht. Die Oberflächen sind putzmittel- und kratzfest.

Wie bereits erwähnt, ist die beschriebene und dargestellte Ausführung nur ein Beispiel zur Verwirklichung der Erfindung, und diese ist nicht darauf beschränkt, vielmehr sind im Rahmen des erfindungsgemäßen Grundgedankens insbesondere in bezug auf die Anordnung und Gestaltung der einzelnen Teile auch noch andere Möglichkeiten gegeben. Die technische Funktion eines erfindungsgemäß hergestellten Mischventils entspricht derjenigen von herkömmlichen Scheibenmischventilen, wie sie z.B. in der DE-AS 1 550 060 offenbart sind.

Bei der Formgebung des Ventilgehäuses 1 aus Porzellan wird erfindungsgemäß ein kombiniertes Dreh- und Gießverfahren angewandt. Eine hohe Maßgenauigkeit derjenigen Bereiche, welche die Kartusche 5 sowie die Messinghülse 2 umschließen, ist im Drehverfahren erreichbar, während der Auslauf im Gießverfahren hergestellt und angeformt ist.

## Patentansprüche

1. Verfahren zur Herstellung eines sanitären Mischventiles, bei dem ein Ventilgehäuse (1) und ein Auslauf aus keramischem Material vorgesehen sind und im Ventilgehäuse (1) eine Ventileinrichtung (5, 2) angeordnet ist, das einen Griffhebel zur Bedienung der Ventileinrichtung trägt, dadurch gekennzeichnet, daß das Ventilgehäuse (1) gedreht wird und daß der Auslauf gegossen und dann an das Ventilgehäuse (1) angeformt wird, so daß ein einstückiger Körper entsteht.

2. Verfahren nach Anspruch 1, dadurch gekennzeichnet, daß in das Ventilgehäuse (1) eine Kartusche (5) eingesetzt und auf dem in einer Hülse (2) gehaltenen Anschlußsockel (4) befestigt wird, wobei die Hülse (2) mit dem Ventilgehäuse (1) radial druckdicht verklebt wird.

3. Verfahren nach Anspruch 1 oder 2, dadruch gekennzeichnet, daß in das Ende (10) des Auslaufes ein Strahlregler (9) eingesetzt wird.

4. Nach dem Verfahren gemäß Anspruch 1 oder 2 hergestelltes sanitäres Mischventil, dadurch gekennzeichnet, daß das Ventilgehäuse (1) ein die Ventileinrichtung (5, 2) umschließender Keramikdrehteil ist und an den Drehteil der Auslauf (1) angeformt ist.

## Claims

1. Process for the production of a sanitary mixing valve in which a valve housing (1) and an outlet of ceramic material are provided, and in the valve housing (1) there is arranged a valve device (5, 2), which carries a hand level for operating the valve device, characterised in that the valve housing (1) is turned and in that the outlet is cast and then formed on to the valve housing (1) so as to produce a one-piece body.

2. Process according to claim 1, characterised in that a cartridge (5) is inserted into the valve housing (1) and is secured on the connection base (4) held in a sleeve (2), this sleeve (2) being cemented to the valve housing (1) in a radially pressure-tight manner.

3. Process according to claim 1 or 2, characterised in that a jet regulator (9) is inserted into the end (10) of the outlet.

4. A sanitary mixing valve produced according to the process of claim 1 or 2, characterised in that the valve housing (1) is a turned ceramic part which encloses the valve device (5, 2) and the outlet (1) is formed on to the turned part.

## Revendications

1. Procédé de fabrication d'une vanne sanitaire pour mitiger, pour laquelle un corps de vanne (1) et un bec d'écoulement sont prévus en un matériau céramique et un mécanisme de vanne (5, 2) qui porte un levier à poignée pour la manœuvre du mécanisme de vanne est agencé dans le corps de vanne (1), caractérisé en ce que le corps du vanne (1) est tourné et en ce que le bec d'ecoulement est coulé et ensuite façonné sur le corps de vanne (1) de façon qu'il se forme un corps d'une pièce.

2. Procédé suivant la revendication 1, caractérisé en ce qu'une cartouche (5) est insérée dans le corps de vanne (1) et elle est fixée à une embase de raccordement (4) contenue dans une douille (2), la douille (2) étant radialement collée de manière étanche au corps de vanne (1).

3. Procédé suivant l'une ou l'autre des revendications 1 et 2, caractérisé en ce qu'un régulateur de jet (9) est inséré dans l'extrémité (10) du bec d'écoulement.

4. Vanne sanitaire pour mitiger fabriquée selon le procédé suivant l'une ou l'autre des revendications 1 et 2, caractérisée en ce que le corps de vanne (1) est une pièce tournée en céramique, qui enferme le mécanisme de vanne (5, 2), le corps de vanne étant façonné sur la pièce tournée du bec d'écoulement (1).

Druckdicht verklebt